# EUROPÄISCHE PATENTSCHRIFT

(11) **EP 0 689 329 B1**
(45) Veröffentlichungstag und Bekanntmachung des Hinweises auf die Patenterteilung: **11.12.2002**
(21) Anmeldenummer: 95105352.9
(22) Anmeldetag: 08.04.1995
(51) Int. Cl.: H04M 1/02, H04M 1/21

(54) **Schnurloses Telefon mit einem Schiebeteil für ein Adressenfeld**
Cordless telephone with a sliding tray for a memorandum
Téléphone sans fil pourvu d'un tiroir pour mémorandum

(30) Priorität: 20.06.1994 DE 9409969 U
(43) Veröffentlichungstag der Anmeldung: 27.12.1995
(73) Patentinhaber: GRUNDIG Aktiengesellschaft, 90471 Nürnberg (DE)
(72) Erfinder: Lüpke, Günther, Grundig E.M.V.Max Grundig GmbH & C, D-90762 Fürth (DE)

(56) Entgegenhaltungen:
- EP-A- 0 275 996
- EP-A- 0 535 903
- DE-U- 8 906 114
- DE-U- 9 110 020
- DE-U- 9 111 047
- DE-U- 9 409 969
- US-A- 5 173 937

## Beschreibung

Die Erfindung betrifft ein schnurloses Telefon nach dem Oberbegriff des Anspruchs 1.

Schnurlose Telefone werden immer beliebter und erscheinen in immer größerer Stückzahl auf dem Telekommunikationsmarkt. Anders als bei stationären Telefonapparaten, bei denen meist ein Adressenverzeichnis in unmittelbarer Nähe plaziert ist, sind bei einem schnurlosen Handapparat wenige Möglichkeiten gegeben, Adressenverzeichnisse anzuordnen. In den meisten Fällen muß der Teilnehmer sich die wichtigsten Nummern merken.

Es sind bereits Handapparate bekannt, bei denen auf der Rückseite des Apparates ein beschriftbares Feld vorhanden ist, auf dem beispielsweise Kurzwahlnummern notiert werden können. Nachteilig ist dabei jedoch zum einen, daß das beschriftbare Feld auf der den Bedienelementen entgegengesetzten Seite angebracht ist, der Apparat also beim Wählen erst gedreht werden muß und zum anderen, daß die notierten Kurzwahlnummern, da nach außen hin sichtbar, auch von Unbefugten leicht gelesen werden können.

Diese Nachteile sind z.B. mit dem in DE-U-91 10 020 offenbarten Register überwunden, bei dem eine beschriftbare Karte in eine durchsichtige Abdeckung eingelegt wird. Diese Abdeckung wird dann durch Druck z.B. auf der Innenseite des Apparates angebracht. Bei Nichtgebrauch des Registers bleibt jedoch die Abdeckung sichtbar, es sei denn, man nimmt das ganze Register ab.

Weiterhin ist aus EP-A1-0384894 eine Teilnehmer-Telefonanordnung bekannt. Hier ist ein kartenförmiges, in numerierte Zeilen eingeteiltes, beschriftbares Teilnehmerverzeichnis vorgesehen, welches Festhaltemittel aufweist, die eine leicht lösbare Befestigung desselben an einer Schnur des mobilen Handapparates ermöglicht. Dieses Teilnehmerverzeichnis enthält vorgedruckte und von Null bis Neun numerierte Zeilen, die zum Eintragen der wichtigsten Gesprächspartner, deren Nummern nach bekanntem Kurzwahlverfahren eingespeichert werden können, dienen. Erweiterbar ist dieses Teilnehmerverzeichnis dadurch, daß mehrere Teilnehmerverzeichnis-Karten vorhanden und zu einem Buch vereinigt sind und daß an zwei gegenüberliegenden Buchseiten je ein Klettenklebeband zum lösbaren Schließen des Buches über einer Schnur angebracht ist. Auch dieses Teilnehmerverzeichnis ist leicht von Unbefugten einsehbar. Die Befestigung des Verzeichnisses am Handapparat und die Handhabung ist außerdem schwierig und störend.

Aufgabe der Erfindung ist es, an einem schnurlosen Telefon ein beschriftbares Adressenfeld anzubringen, welches bei Nichtgebrauch nicht sichtbar und bei Gebrauch von der gleichen Seite aus wie das Tastaturfeld zu sehen ist.

Eine erste Lösung ist aus EP-A-0 275 996 bekannt. Dabei ist ein beschriftbares Adressenfeld auf der Innenseite einer verschließbaren Klappe angebracht. Die Realisierung eines beschriftbaren Feldes auf einem Schiebeteil ist aus dem Dokument US-A-5 173 937 bekannt, allerdings nur in Zusammenhang mit einem schnurgebundenen Telefon. Dabei ist die Unsichtbarkeit des Schiebeteils durch die Tatsache ermöglicht, daß der Schiebeteil unter dem (auf einer waagerechten Fläche) liegenden Telefonapparat versteckt bleibt.

Die Aufgabe wird in einer alternativen form durch die Merkmale des kennzeichnenden Teils des Anspruchs 1 gelöst. Weitere vorteilhafte Gestaltungsmöglichkeiten sind in den abhängigen Ansprüchen aufgeführt.

Die Erfindung soll nun anhand der Zeichnungen näher erläutert werden. Es zeigen:
- Fig. 1: ein schnurloses Telefon mit dem erfindungsgemäßen Schiebeteil mit Adressenfeld,
- Fig. 2: dasselbe schnurlose Telefon von der Rückseite aus gesehen,
- Fig. 3: das zweite Unterteil des schnurlosen Telefons,
- Fig. 4: das zweite Unterteil aus Fig. 3, von der anderen Seite aus gesehen und
- Fig. 5: das zweite Unterteil als Schnittdarstellung mit ausgefahrenem Schiebeteil.

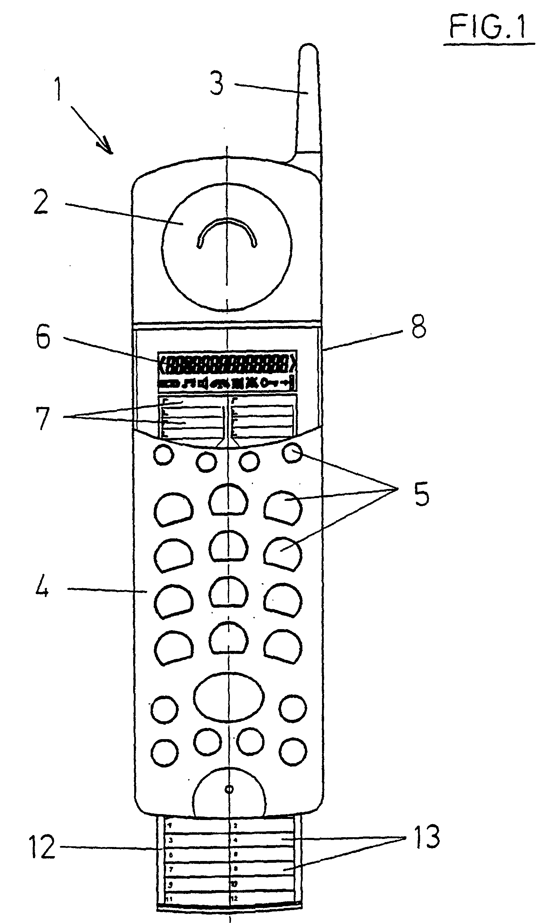

Die Fig. 1 zeigt einen Blick auf das Tastaturfeld 4 eines schnurlosen Telefons 1. Das Gehäuseoberteil 8 beinhaltet die Hör- und Sprecheinrichtung 2, eine Antenne 3, ein Anzeigefeld (Display) 6, sowie ein Namensfeld von Teilnehmern, die über einzugebende Symbole anwählbar sind. Ein zweiter Teil des Oberteils trägt ein Tastaturfeld 4 mit den Bedienungseinheiten 5. Unterhalb des Tastaturfeldes 4 ist das ausgefahrene Schiebeteil 12 mit dem Adressenfeld 13 zu sehen. Dieses Adressenfeld 13 ist bei ausgefahrenem Schiebeteil 12 sichtbar und die Kurzwahlbefehle können mit den auf der gleichen Geräteseite liegenden Bedienungseinheiten 5 eingegeben werden. Wird das Adressenfeld 13 nicht benötigt, so wird das Schiebeteil 12 in das Gerätegehäuse eingeschoben und es ist vor dem Blick Unbefugter geschützt.

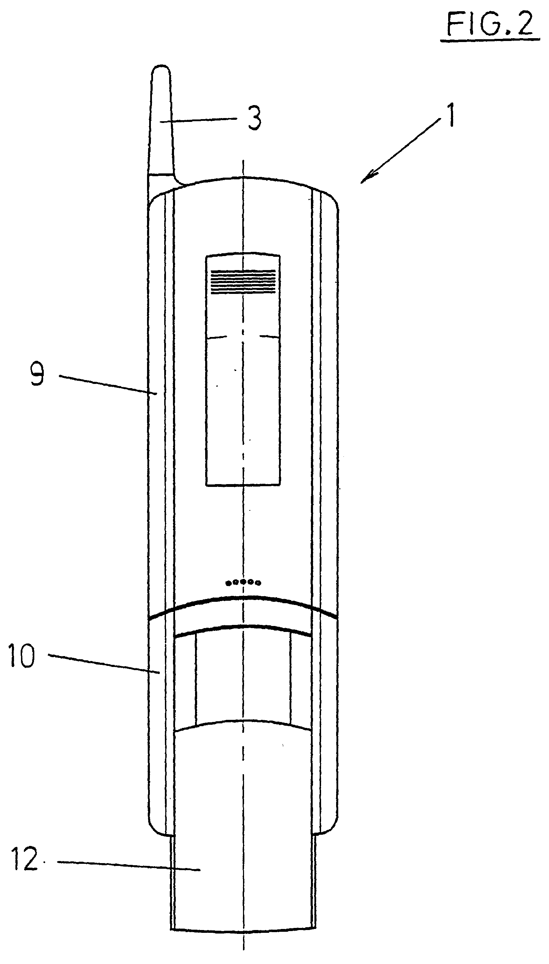

Die Rückseite des schnurlosen Telefons 1 ist in Fig. 2 zu sehen. Es ist zu erkennen, daß die Rückseite aus einem ersten Unterteil 9 und einem zweiten Unterteil 10 besteht. In dem zweiten Unterteil 10 ist schiebbar das Schiebeteil 12 gelagert. Es ist im ausgeschobenen Zustand gezeichnet. Dessen über das Gehäuse des schnurlosen Telefons 1 herausragender Teil trägt auf der gegenüberliegenden Seite das Adressenfeld 13.

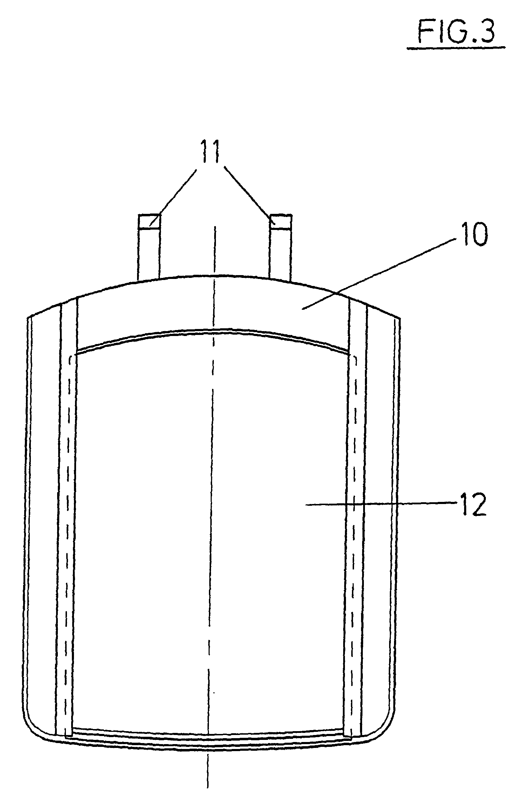

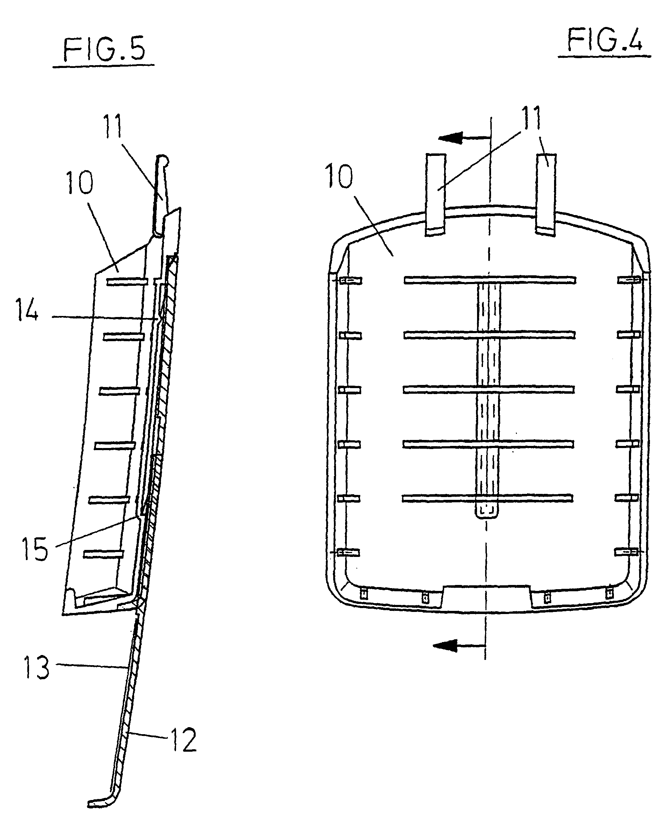

In der Fig. 3 ist das zweite Unterteil 10 mit dem Schiebeteil 12 dargestellt. Dieses zweite Unterteil 10 ist auf das Oberteil aufschiebbar und mittels der beiden Rasthaken 11 mit dem ersten Unterteil 9 verbunden. Dasselbe zweite Unterteil 10, nur von der gegenüberliegenden Seite aus gesehen, ist in Fig. 4 gezeichnet. Wird das Unterteil 10 in Pfeilrichtung geschnitten, so ergibt sich die Darstellung in Fig. 5. Hier ist deutlich zu erkennen, wie das Schiebeteil 12 mit dem Adressenfeld 13 in dem Unterteil 10 verschiebbar gelagert ist. Im ausgefahrenen Zustand ragt das Adressenfeld 13 über das Unterteil 10 heraus. Durch die Rastung 15 wird das Schiebeteil 12 im Unterteil 10 gehalten. Soll das Schiebeteil 12 jedoch zum Zwecke der Beschriftung aus dem schnurlosen Telefon herausgenommen werden, so kann durch leichtes Verbiegen des Schiebeteils 12 die Rastung 15 überwunden werden, wodurch das Schiebeteil freigegeben ist. Ist das Schiebeteil 12 in das Unterteil 10 eingefahren, so wird es durch die Rastung 14 mit diesem verrastet.

## Patentansprüche

1. Schnurloses Telefon (1), enthaltend eine Hör- und Sprecheinrichtung (2), eine Antenne (3); ein Tastaturfeld (4) mit Bedienungseinheiten (5), ein Anzeigefeld (6) und ein Namensfeld (7) für die Kurzwahl, wobei das schnurlose Telefon aufgebaut ist aus einem Oberteil (8) und einem zweigeteilten Unterteil (9,10), und das zweite Unterteil (10) auf das Oberteil aufschiebbar und mit dem ersten Unterteil (9) mittels Rasthaken (11) verrastbar ist,
**dadurch gekennzeichnet,**
**daß** das zweite Unterteil (10) ein Schiebeteil (12) enthält, welches schieb- und rastbar mit dem zweiten Unterteil (10) verbunden ist und eine eingefahrene und eine ausgefahrene Stellung einnehmen kann, wobei jede der beiden Stellungen rastbar ist und das Schiebeteil (12) ein beschriftbares Adressenfeld (13) enthält, welches im ausgefahrenen Zustand sichtbar ist.

2. Schnurloses Telefon (1) nach Anspruch 1,
**dadurch gekennzeichnet,**
**daß** das Adressenfeld (13) und das Tastaturfeld (4) von der gleichen Seite des schnurlosen Telefons aus zu sehen sind.

3. Schnurloses Telefon (1) nach den Ansprüchen 1 und 2,
**dadurch gekennzeichnet,**
**daß** das Schiebeteil (12) durch Lösen einer Rastung vom zweiten Unterteil (10) lösbar und zum Zwecke der Beschriftung abnehmbar ist.

## Claims

1. Cordless telephone (1), comprising a listening and speaking device (2), an antenna (3), a keypad (4) with operating units (5), a display field (6) and a name panel (7) for one-touch dialling, wherein the cordless telephone comprises an upper part (8) and a lower part (9, 10) divided into two parts, and the second lower part (10) is slidable on the upper part and latchable with the first lower part (9) by means of latching hooks (11), **characterized in that** the second lower part (10) comprises a sliding part (12) that is joined slidably and latchably to the second lower part (10) and can assume a retracted and an extended position, wherein each of the two positions is latchable and the sliding part (12) comprises an inscribable address panel (13) that is visible in the extended state.

2. Cordless telephone (1) according to Claim 1, **characterized in that** the address panel (13) and the keypad (4) can be seen from the same side of the cordless telephone.

3. Cordless telephone (1) according to Claims 1 and 2, **characterized in that** the sliding part (12) is detachable by releasing a latch of the second lower part (10) and is removable for the purpose of inscription.

## Revendications

1. Téléphone sans fil contenant un dispositif d'écoute et de conversation (2), une antenne (3), une zone de clavier (4) comportant des unités d'actionnement (5), une zone d'affichage (6) et une zone (7) portant des noms pour la sélection abrégée, le téléphone sans fil étant constitué par une partie supérieure (8) et une partie inférieure (9,10) divisée en deux, et la seconde partie inférieure (10) pouvant être appliquée sur la partie supérieure et pouvant être encliquetée avec la première partie inférieure (9) à l'aide de crochets d'encliquetage (11), **caractérisé en ce que** la seconde partie inférieure (10) contient une partie coulissante (12), qui est reliée avec possibilité de coulissement et d'encliquetage à la seconde partie inférieure (10) et peut prendre une position rétractée et une position ressortie, chacune des deux positions pouvant être encliquetée et la partie coulissante (12) contenant une zone d'adresses (13), dans laquelle une inscription peut être portée et qui est visible à l'état déployé.

2. Téléphone sans fil (2) selon la revendication 1, **caractérisé en ce que** la zone d'adresses (13) et la zone de clavier sont visibles du même côté du téléphone sans fil.

3. Téléphone sans fil (2) selon la revendication 1 et 2, **caractérisé en ce que** la partie coulissante (12) est amovible par détachement d'un système d'encliquetage à partir de la seconde partie inférieure (10) et peut être retirée pour le marquage d'une inscription.
